# EUROPÄISCHE PATENTANMELDUNG

(11) **EP 2 397 779 A2**
(43) Veröffentlichungstag der Anmeldung: **21.12.2011**
(21) Anmeldenummer: 11002025.2
(22) Anmeldetag: 11.03.2011
(51) Int. Cl.: F24D 3/14

(54) **Deckplatte oder plattenförmiges Kuppelelement als Teil des Aufbaues einer Flächenheizung, sowie Aufbau einer Fussbodenheizung für ein Gebäude**

(30) Priorität: 11.05.2010 EP 10004971
(71) Anmelder: Feist, Artus, 53424 Remagen (DE)
(72) Erfinder: Feist, Artus, 53424 Remagen (DE)
(74) Vertreter: Walther, Walther & Hinz GbR

(57) **Zusammenfassung**

Gegenstand der Erfindung ist die Deckplatte oder plattenförmiges Kuppelelement als Teil des Aufbaues einer Flächenheizung, insbesondere einer Fußbodenheizung, wobei die Deckplatte oder das plattenförmige Kuppelelement eine Mehrzahl an durchgehenden Bohrungen aufweist, wobei eine Mehrzahl der Bohrungen auf einer Seite der Deckplatte oder der plattenförmigen Kuppelelemente durch Nuten miteinander verbunden sind.

## Beschreibung

Die vorliegende Erfindung betrifft eine Deckplatte oder ein plattenförmiges Kuppelelement als Teil des Aufbaues einer Flächenheizung, sowie den Aufbau einer Flächenheizung, insbesondere einer Fußbodenheizung für ein Gebäude, mit mindestens einem auf dem Untergrund mäanderförmig verlegten Heizrohr.

Flächenheizungen, und hier insbesondere Fußbodenheizungen sind seit Langem bekannt. So ist beispielsweise aus der EP 1 512 915 A2 ein Fußbodenheizungsaufbau bekannt, bei dem zwischen zwei mit Öffnungen versehenen Deckplatten Rohrschlangen verlegt sind. Zwischen den einzelnen Rohrschlangen und auch zwischen den Deckplatten befindet sich ein Trägermaterial, beispielsweise aus einem Leichtbaustoff, der z. B. als Wabenmaterial ausgebildet ist. Die Verbindung der Deckplatten mit dem Trägermaterial erfolgt durch jeweilige Klebeschichten. Nachteilig an dem Aufbau dieser bekannten Fußbodenheizung ist, dass die Stabilität bei Verlegen einzelner Fußbodenheizungsplatten im Aufbau, wie aus der EP 1 512 915 A2 bekannt, nicht hinreichend ist. Denn es ist davon auszugehen, dass sich die Platten gegeneinander bewegen werden, was insbesondere dann von Nachteil ist, wenn beispielsweise in Altbauten auf Holzböden, die immer uneben sind, derartige Platten verlegt werden sollen. Eine Ebene im Sinne eines ebenen Bodens ist mit einem solchen Aufbau einzelner Heizplatten nicht möglich. Dies selbst dann, wenn die einzelnen Platten verrastend miteinander verbunden sind.

Ein ähnlicher Aufbau ist aus der US 4,301,859 bekannt, wobei hier ein Fußbodenplattenelement gezeigt ist, bei dem zwischen zwei Platten eine Heizschlange verlegt ist. Aus Stabilitätsgründen befindet sich zwischen den einzelnen Platten zur Armierung eine Gewebeschicht. Für die Verbindung der einzelnen plattenförmigen Heizungselemente ist entweder eine Art Nut-und Federverbindung vorgesehen, oder aber die einzelnen plattenförmigen Elemente weisen umlaufend an der Kante einen Versatz zwischen der oberen und der unteren Platte auf mit der Folge, dass die plattenförmigen Elemente im Bereich des Randes einander überlappend verlegt werden können. Zur Verbindung der plattenförmigen Elemente sind dann beispielsweise Schrauben vorgesehen. Nachteilig auch hierbei ist, dass die einzelnen plattenförmigen Elemente bei entsprechender Belastung bei Auflage auf unebenem Untergrund sich relativ zueinander bewegen.

Ein Fußbodenaufbau, der nicht aus einzelnen Elementen besteht, die bei Auflage auf einen Untergrund zusammengesteckt werden, ist aus der DE 20 2006 015 397 U1 bekannt. Der aus dieser Gebrauchsmusterschrift bekannte Fußboderiaufbau zeichnet sich dadurch aus, dass auf einem Untergrund zunächst ein plattenförmiges Bauteil aufgelegt wird, in das das Heizrohr einer Fußbodenheizung eingelegt ist. Über dem plattenförmigen Bauteil befindet sich eine Anzahl von weiteren Schichten, so insbesondere einer Entkopplungsmatte erheblicher Stärke, wobei auf der Entkopplungsmatte eine Verfüllmasse zum Aufkleben beispielsweise von Fliesen vorgesehen ist. Die Höhe eines solchen Fußbodenaufbaues ist nicht unerheblich. Darüber hinaus ist die Entkopplungsmatte ein fließartiges Gebilde und wirkt insofern naturgemäß isolierend.

Aus der DE 20 2008 005 910 U1 ist eine Montageplatte zum Fixieren von Heizrohren auf einer Grundplatte bekannt. Zum Fixieren dienen hierbei übereinander angeordnete Platten, die versetzt zueinander verlegt sind, so dass die Platten einander überlappen. Die Platten lagern hierbei auf Abstandshaltern, die auf der Grundplatte aufsitzen und zwischen denen die Heizrohre mäanderförmig verlegt sind. Die Platten selbst sind mit einer Vielzahl von Öffnungen versehen, durch die der Kleber in den Raum zwischen der Grundplatte und den auf den Abstandshaltern aufliegenden Platten zur Erzielung eines guten Wärmeübergangs eingebracht wird.

Wenn nun der Aufbau einer Flächenheizung, insbesondere einer Fußbodenheizung, derart gewählt ist, dass die Heizrohre in Zwischenräumen zwischen Grundplatten einliegen und die Heizrohre zumindest oberflächenbündig mit den Grundplatten abschließen, dann liegen die Deckplatten im Wesentlichen vollflächig auf den Grundplatten auf. Im Bereich der Auflage der Deckplatten auf den Grundplatten erfolgt unter den Deckplatten keine oder nur eine ungenügende Verteilung des Klebers. Dies ist insofern nachteilig, als der Bodenaufbau in sich keine stabile Einheit bildet. Das heißt, ein solcher Bodenaufbau wird arbeiten, mithin werden sich die Deckplatten bewegen. Darüber hinaus ist auch der Wärmeübergang eingeschränkt, da die Deckplatten unter Umständen hohl auf den Grundplatten aufliegen. Bei Verwendung eines Klebers oder einer Verfüllmasse im Bereich zwischen den Deckplatten und den Grundplatten mit einem hohen mineralischen Anteil an Füllstoffen, wie z. B. Sand u. a. ließe sich allerdings der Wärmeübergang verbessern.

Die der Erfindung zugrunde liegende Aufgabe besteht somit darin, dafür zu sorgen, dass die Deckplatten vollflächig mit dem jeweiligen Untergrund verbunden sind.

Zur Lösung der Aufgabe wird bei einer Deckplatte der eingangs genannten Art, die eine Mehrzahl an durchgehenden Bohrungen aufweist, erfindungsgemäß vorgeschlagen, eine Mehrzahl der Bohrungen auf einer Seite der Deckplatte durch Nuten untereinander zu verbinden, um so einen Fluss des Klebers oder der Vergussmasse auch unmittelbar unter der Deckplatte bzw. zwischen Deckplatte und Grundplatte zu zulassen, um so einen insgesamt über die Fläche nicht nur steifen Bodenaufbau zu ermöglichen, sondern auch einen homogenen Aufbau bereitzustellen, der gute Wärmeübergangswerte zeigt. Nach einem besonderen Merkmal der Erfindung sind die Deckplatten durch plattenförmige Kuppelelemente miteinander verbunden. Liegen diese plattenförmigen Kuppelelemente auf den Grundplatten auf und bilden die Verbindung für die darauf aufliegenden Deckplatten, dann weisen auch diese plattenförmige Kuppelelemente die entsprechenden Nuten auf der Unterseite, also der der Grundplatte zugewandten Seite auf. Insofern sind die plattenförmigen Kuppelelemente und die Deckplatten in Bezug auf die Bohrungen und die die Bohrungen verbindenden Nuten gleich ausgebildet.

Nach einer besonderen Ausführungsform sind die Nuten flacher als die Höhe der Deckplatte bzw. des plattenförmigen Kuppelelements, so dass die Nut zu drei Seiten geschlossen ist.

Gegenstand der Erfindung ist ebenfalls der Aufbau einer Flächenheizung, insbesondere einer Fußbodenheizung für ein Gebäude gemäß Anspruch 3 mit Deckplatten oder plattenförmigen Kuppelelementen, sowie sie zuvor beschrieben worden sind.

Demzufolge zeichnet sich der Aufbau einer Flächenheizung, insbesondere einer Fußbodenheizung für ein Gebäude mit mindestens einem auf dem Untergrund mäanderförmig verlegten Heizrohr durch folgende Merkmale aus:
Über dem mäanderförmig zwischen den Grundplatten verlegten Heizrohr befindet sich eine Mehrzahl von Deckplatten, wobei der Raum zwischen den Grundplatten und den Deckplatten eine aushärtbare Vergussmasse aufweist, die Deckplatten stehen unmittelbar durch Überlappung oder mittelbar durch Überlappung mit plattenförmigen Kuppelelementen miteinander in Verbindung, die Deckplatten und die Kuppelelemente weisen Bohrungen auf, wobei eine Anzahl von Bohrungen jeweils mindestens einen von der Oberfläche der Deckplatten abstehenden Vorsprung aufweist, der in Eingriff mit einer entsprechenden Bohrung der darunter befindlichen Deckplatte oder des plattenförmigen Kuppelelementes steht, wobei die Vergussmasse durch die Bohrungen in den Deckplatten und/oder den plattenförmigen Kuppelelementen in den Raum zwischen den Deckplatten einerseits und den Grundplatten bzw. dem Untergrund andererseits einbringbar ist, wobei zur besseren Verteilung der Vergussmasse oder des Klebers eine Mehrzahl der Bohrungen der Deckplatten oder der plattenförmigen Kuppelelemente im Verlegezustand auf ihrer Unterseite durch Nuten verbunden sind. Das heißt, die Nuten sind dem Untergrund zugerichtet. Dies gilt sowohl für die Deckplatten, als auch für die plattenförmigen Kuppelelementen, wenn diese zur Verbindung der Deckplatten auf den Grundplatten aufliegen.

Die Deckplatten weisen auf der im verlegten Zustand Unterseite angeordnete Vorsprünge im Bereich der Bohrungen auf. Diese Vorsprünge sind derart ausgebildet, dass sie bei überlappter Verlegung der Deckplatten zueinander in die entsprechenden Bohrungen der überlappten Deckplatte eingreifen. Gleiches gilt bei der Verwendung von plattenförmigen Kuppelelementen.

Wenn somit die Deckplatten einander nicht unmittelbar überlappen, sondern vielmehr plattenförmige Kuppelelemente zwischen den einzelnen nebeneinander angeordneten Deckplatten vorgesehen sind, die die Verbindung zwischen den einzelnen Deckplatten herstellen, und auch diese Kuppelelemente entsprechend der Bohrungen in den Deckplatten Bohrungen aufweisen, können auch in die Bohrungen eines solchen plattenförmigen Kuppelelements die Vorsprünge der darüber befindlichen Deckplatte eingreifen. Insofern sind die einzelnen Deckplatten durch die Vorsprünge an den Bohrungen in jedem Fall verrastend miteinander verlegt. Dies vereinfacht die Verlegung der Deckplatten in der Ebene erheblich, da die Deckplatten insofern relativ zueinander fixiert sind. Denkbar ist ebenfalls die plattenförmigen Kuppelelemente über den Deckplatten zur Verbindung der Deckplatten anzuordnen. Hier können die entsprechenden Vorsprünge an den Bohrungen der plattenförmigen Kuppelelemente vorgesehen sein, die in die Bohrungen der darunter liegenden Deckplatten eingreifen.

In diesem Zusammenhang ist nach einem Merkmal der Erfindung vorgesehen, dass die Deckplatten und die plattenförmigen Kuppelelemente Reihen von Bohrungen unterschiedlichen Durchmessers aufweisen, wobei eine Anzahl von Bohrungen kleineren Durchmessers den Vorsprung aufweisen. Der Vorsprung umgibt hierbei vorzugsweise kranzförmig die Bohrung zumindest partiell. In diesem Zusammenhang entspricht der Außendurchmesser des kranzartigen Vorsprunges in etwa dem Bohrungsdurchmesser der größeren Bohrung. Insbesondere in Verbindung mit dem weiteren Merkmal, wonach die Reihen von Bohrungen unterschiedlichen Durchmessers abwechselnd und versetzt zueinander in der Deckplatte und/oder dem plattenförmigen Kuppelelement angeordnet sind, ergibt sich somit die Möglichkeit, die einzelnen Deckplatten entweder unmittelbar überlappend zu verlegen, oder mittelbar durch die bereits zuvor beschriebenen Kuppelelemente. Darüber hinaus wird durch die versetzte Anordnung von Bohrungsreihen zueinander die Deckplatte bzw. das plattenförmige Kuppelelement weit weniger geschwächt, als dies der Fall wäre, wenn die gleiche Anzahl von Bohrungen in Reihen angeordnet wäre, bei denen die Bohrungen nicht versetzt zueinander liegen. Dies gilt umso mehr, wenn die Bohrungen der nebeneinanderliegenden Bohrungsreihen einen unterschiedlichen Durchmesser aufweisen. Das Maß der Überlappung ist hierbei größer als der Durchmesser der Heizrohre, um genügend Raum für das Einbringen der Schrauben zur Verfügung zu haben, mit denen die Platten oder Kuppelelemente auf den Grundplatten zu befestigen sind.

Nach einem besonderen Merkmal der Erfindung ist des Weiteren vorgesehen, dass die zwischen dem mäanderförmig verlegten Heizrohr angeordneten Grundplatten aus isolierendem Werkstoff, insbesondere einem Hartschaumstoff z. B. Polystyrol, ausgebildet sind, wobei diese Platten nicht nur eine isolierende Wirkung ausüben, sondern gleichzeitig auch der Druckverteilung dienen. Die Höhe dieser Platten aus isolierendem Werkstoff entspricht in etwa der Höhe dem auf dem Untergrund verlegten Heizrohr bzw. steht leicht über dem Heizrohr über, sodass bei überlappender Verlegung der Deckplatten sich die Vorsprünge in die zwischen dem Heizrohr verlegten Platten aus isolierendem Werkstoff, z. B. Polystyrol, einstanzen. Das heißt, es entsteht hierbei ein Verbund an Deckplatten, bei dem die einzelnen Deckplatten zum einen relativ zueinander und zum anderen auf den Grundplatten aus z. B. Polystrol fixiert sind, d. h., dass sich die Deckplatten nicht bewegen können. Dies gilt entsprechend bei der Verlegung von Deckplatten, die durch plattenförmige Kuppelelemente miteinander in Verbindung stehen. Auch hier können die kleineren Bohrungen in Richtung der Polystyrolplatten auskragende Vorsprünge aufweisen.

Zusätzlich kann nach einem vorteilhaften Merkmal vorgesehen sein, dass die Deckplatten und/oder die plattenförmigen Kuppelelemente mit den Platten aus isolierendem Werkstoff verbunden, insbesondere verschraubt sind. Hierzu sind insbesondere Schrauben mit einem Gewindedurchmesser vorgesehen, der in etwa ¾ des Durchmessers des Schraubenkopfes beträgt. Das heißt, dass das Gewinde der Schraube einen gegenüber dem Kopf verhältnismäßig großen Durchmesser aufweist, was dafür sorgt, dass die Platten gegen Abheben bei einer Schraubverbindung mit der darunter befindlichen Hartschaumplatte z. B. der Polystyrolplatte gesichert sind. Insbesondere die großen Bohrungen in den Deckplatten sind mit einer Senkung versehen, um bei Verwendung von Senkkopfschrauben sicherzustellen, dass die Schrauben nicht über die Oberseite der Deckplatten überstehen, mithin sich eine ebene Oberfläche ergibt.

Um zu verhindern, dass das Heizrohr seine Wärme nicht nach unten, d. h. in Richtung auf den Untergrund zu abstrahlt, ist nach einem weiteren Merkmal der Erfindung vorgesehen, dass auf dem Untergrund unter dem Heizrohr und unter den Grundplatten eine wärmeisolierende Folie, z. B. eine Schaumfolie, angeordnet ist.

Anhand der Zeichnungen wird die Erfindung nachstehend beispielhaft näher erläutert.
- Fig. 1: zeigt eine schematische perspektivische Darstellung des Aufbaues einer Fußbodenheizung, wobei die Deckplatten im abgenommenen Zustand dargestellt sind;
- Fig. 2: zeigt einen Schnitt durch den Aufbau einer Fußbodenheizung gemäß Figur 1;
- Fig. 3: zeigt zwei Deckplatten, die durch plattenförmige Kuppelelemente miteinander in Verbindung stehen,
- Fig. 3a: zeigt einen Schnitt gemäß Fig. 3;
- Fig. 4: zeigt eine andere Ausführungsform von Deckplatten.

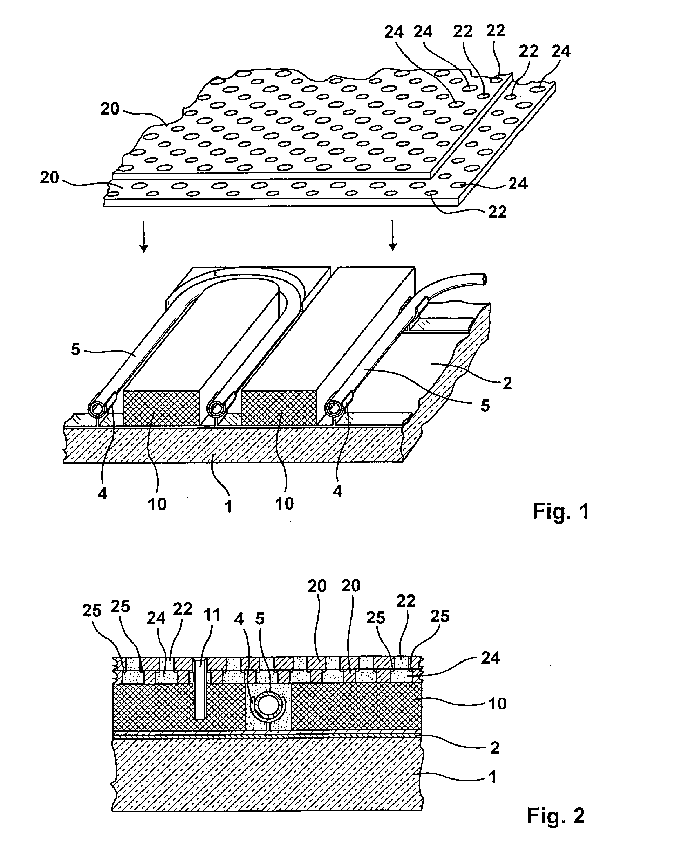

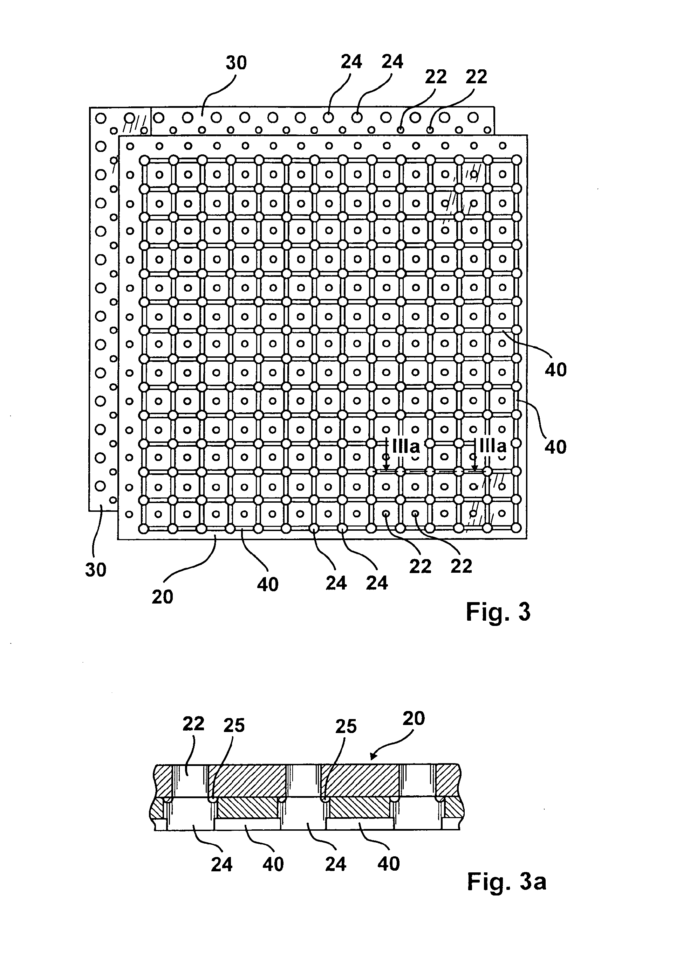

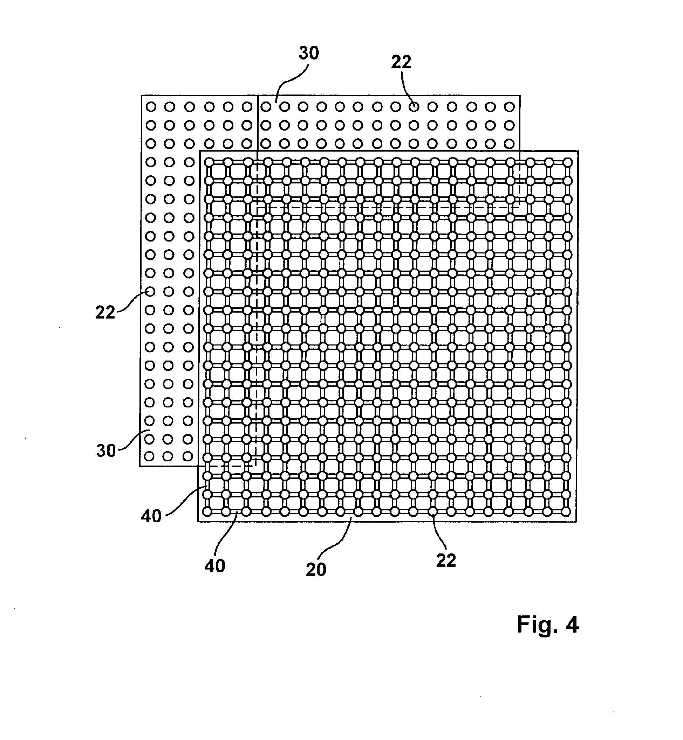

Aus Fig. 1, wie ausgeführt, ist schematisch der Fußbodenaufbau in perspektivischer Darstellung erkennbar. So ist der Untergrund mit 1 bezeichnet beispielsweise eine Rohbetondecke. Auf der Rohbetondecke 1 befindet sich eine Folie 2, die nach unten hin wärmeisolierend ausgebildet ist. Auf der Folie 2 befinden sich Halter 4 zur clipsbaren Aufnahme des Heizrohres 5. Denkbar ist auch die Verwendung von Schienen, die die Heizrohre clipsbar aufnehmen. Erkennbar ist, dass das Heizrohr mäanderförmig verlegt ist. Zwischen den einzelnen mäanderförmig verlegten Heizrohren befinden sich Grundplatten 10 aus isolierendem Werkstoff, beispielsweise Polystyrol. Erkennbar ist, dass der Zwischenraum zwischen den mäanderförmig verlegten Heizschlangen des Heizrohres 5 im Wesentlichen durch die Grundplatten 10 ausgefüllt ist. Über die Heizrohre und die Platten 10 aus Polystyrol werden Deckplatten gelegt. Die Deckplatten zur Abdeckung der Heizrohre sind mit 20 bezeichnet. Die Deckplatten werden einander überlappend auf die Platten aus Polystyrol aufgelegt, d. h., sie sind entweder unmittelbar miteinander verbunden oder aber die Deckplatten sind durch plattenförmige Kuppelelemente 30 (Fig. 3, Fig. 4) miteinander verbunden, wobei die Kuppelelemente auf der Oberseite der Deckplatte durch Punktschweißung mit dieser verbunden sind. Jede Deckplatte weist solche plattenförmigen Kuppelelemente an zwei aneinander anstoßenden Seiten auf. Vorteilhaft bei der Ausbildung der Deckplatten und entsprechend auch bei der Ausbildung der plattenförmigen Kuppelelemente ist, dass sowohl die plattenförmigen Kuppelelemente als auch die Deckplatten Reihen von Bohrungen mit Bohrungen unterschiedlicher Größe aufweisen, wobei die Bohrungen der jeweiligen Reihe versetzt zu den Bohrungen der anderen Reihe sind, und zwar genau um die Hälfte des Abstandes zwischen den Bohrungen. Wie sich insbesondere aus Figur 2 entnehmen lässt, weisen die kleineren Bohrungen über die Oberfläche überstehende Vorsprünge, insbesondere kranzartige Vorsprünge 25 auf. Diese kranzartigen Vorsprünge 25 der kleineren Bohrung 22 greifen in die größere Bohrung 24 der darunter befindlichen Platte 20 ein. Hierdurch sind die Platten relativ zueinander fixiert. Denkbar ist aber auch die Anordnung gleich großer Bohrungen 24 (Fig. 4).

Durch die Bohrungen, und hier insbesondere durch die größeren Bohrungen der Platten, können Schrauben 11 eingedreht werden, um die Platten abhebsicher auf den Platten 10 (Grundplatte) aus Polystyrol fixieren zu können. In diesem Zusammenhang hat sich als vorteilhaft herausgestellt, wenn die Platten oder die plattenförmigen Kuppelelemente einander in einer Breite überlappen, die größer als der Rohrdurchmesser ist, um auch im Überlappungsbereich genügend Platz zu haben, um die Platten bzw. die Kuppelelemente auf den Polystyrolplatten anzuschrauben. Vorteilhaft ist die Überlappung in der Größenordnung von drei Bohrungsreihen vorgesehen (siehe beispielhaft Fig. 3). Die Bohrungen weisen Ansenkungen für Senkkopfschrauben auf. Die Platten aus Polystyrol besitzen ein Raumgewicht zwischen 50 und 70 kg/m³; sie sind somit sehr dicht und insofern nicht nur in der Lage, Schrauben sicher zu halten, sondern auch in der Lage, die in Gebäuden üblichen Verkehrslasten aufzunehmen. Die Schrauben sind insbesondere derart ausgebildet, dass der Schraubenschaft einen relativ gesehen großen Durchmesser gegenüber dem Schraubenkopf aufweist, wobei insbesondere der Schraubenschaft etwa ¾ des Durchmessers des Schraubenkopfes ausmacht. Hierdurch wird erreicht, dass eine solche Schraube auch in solchen Platten aus Polystyrol eine ausreichende Haltekraft bereitstellt. Sind die Deckplatten 20 aufgelegt, so kann durch die Bohrungen 22, 24 das zunächst flüssige, pastöse Vergussmaterial in den Raum unterhalb der Platten eingebracht werden, wobei festzustellen ist, dass dieses Vergussmaterial nach dem Einbringen aushärtet. Es handelt sich hierbei insbesondere um ein Kunstharz gebundenes Vergussmaterial, wobei als Zuschlagsstoff Sand oder Quarzmehl eingesetzt wird. Die Verfüllung mit Vergussmaterial erfolgt so lange, bis das Vergussmaterial auf der Oberseite der Bohrungen wieder austritt.

Bei den Darstellungen gemäß Fig. 3 und Fig. 4 sind die einzelnen Deckplatten nicht unmittelbar durch Überlappung miteinander verbunden, sondern mittelbar durch die plattenförmigen Kuppelelemente 30 auf den Deckplatten. Die Anordnung der Bohrungen 22 und 24 in den plattenförmigen Kuppelelementen 30 ist genauso getroffen, wie bei den Deckplatten 20. Insofern gibt es auch hier Reihen kleiner und Reihen großer Bohrungen (Fig. 3), die abwechselnd und versetzt zueinander in dem plattenförmigen Kuppelelement 30 angeordnet sind. Auch bei den Kuppelelementen weisen die kleineren Bohrungen 22 zumindest partiell die kranzartigen Vorsprünge 25 auf, gleich wie bei den Bohrungen der Deckplatten. Denkbar ist aber auch die Anordnung gleich großer Bohrungen (Fig. 4).

Wesentlich bei der Darstellung gemäß Fig. 3 und Fig. 4 ist die Anordnung von Nuten 40 zwischen den einzelnen Bohrungen 24. Erkennbar sind nur die Bohrungen größeren Durchmessers auf der im Einbauzustand unteren Seite der Deckplatte durch die Nuten 40 verbunden (Fig. 3). Denkbar ist allerdings auch die Verbindung der Bohrungen 22 mit dem kleineren Durchmesser durch Nuten 40. Dies sollte alternativ erfolgen, da eine Verbindung sowohl der kleinen als auch der großen Bohrungen zu einer unzulässigen Schwächung der Deckplatte führen könnte, wenn für diese nicht eine größere Dicke gewählt wird. Gleiches gilt sinngemäß auch für die plattenförmigen Kuppelelemente 30. Auch diese sind mit entsprechenden Nuten versehen, wenn diese unmittelbar auf der jeweiligen Platte oder dem Untergrund aufliegen und die Deckplatten sich darüber befinden.

Das heißt, die Nuten 40, ob sie in der Deckplatte oder dem plattenförmigen Kuppelelement angeordnet sind, befinden sich immer auf der Seite, die dem Untergrund und damit den Platten 10 zugewandt ist.

Die Deckplatte gemäß Fig. 4 unterscheidet sich von der gemäß Fig. 3 ausschließlich darin, dass die Bohrungsreihen Bohrungen 22 gleichen Durchmessers zeigen, die zudem nicht versetzt zueinander verlaufen. In gleicher Weise sind auch die plattenförmigen Kuppelelemente ausgebildet. Insgesamt gilt, dass durch die Nuten der Wärmeleitfähigkeit verbessert wird, wenn sowohl die Nuten als auch die Bohrungen mit einer Vergussmasse ausgefüllt sind, die einen hohen Anteil mineralischer Zuschlagstoffe, wie z. B. Sand, Quarzmehl aufweist. Denkbar ist dann sogar der Einsatz von Deckplatten oder plattenförmigen Kuppelelementen aus Kunststoff.

## Patentansprüche

1. Deckplatte (20) oder plattenförmiges Kuppelelement (30) als Teil des Aufbaues einer Flächenheizung, insbesondere einer Fußbodenheizung, wobei die Deckplatte (20) oder das plattenförmige Kuppelelement (30) eine Mehrzahl an durchgehenden Bohrungen (22, 24) aufweist, wobei eine Mehrzahl der Bohrungen (22, 24) auf einer Seite der Deckplatte (20) oder der plattenförmigen Kuppelelemente (30) durch Nuten (40) miteinander verbunden sind.

2. Deckplatte oder plattenförmiges Kuppelelement nach Anspruch 1,
**dadurch gekennzeichnet,**
**dass** die Tiefe der Nuten (40) geringer ist als die Stärke der Deckplatten (20) oder der plattenförmigen Kuppelelemente (30).

3. Aufbau einer Flächenheizung, insbesondere einer Fußbodenheizung für ein Gebäude, mit einem auf dem Untergrund (1) zwischen Grundplatten (10) mäanderförmig verlegten Heizrohr (5), wobei der Aufbau eine Mehrzahl von Deckplatten (20) über dem Heizrohr und den Grundplatten (10) umfasst, wobei der Raum unter den Deckplatten (20) eine aushärtbare Vergussmasse aufweist, wobei die Deckplatten (20) unmittelbar durch Überlappung oder mittelbar durch Überlappung mittels plattenförmiger Kuppelelemente (30) miteinander in Verbindung stehen, wobei die Deckplatten (20) und die plattenförmigen Kuppelelemente (30) Bohrungen (22, 24) aufweisen, wobei eine Anzahl von Bohrungen jeweils mindestens einen von der Oberfläche der Deckplatte (20) abstehenden Vorsprung (25) aufweisen, der in Eingriff mit einer entsprechenden Bohrung (24) der darunter befindlichen Deckplatte (20) oder des plattenförmigen Kuppelelements (30) steht, wobei durch die Bohrungen (22, 24), ebenfalls die aushärtbare Vergussmasse, in den Raum unter den Deckplatten (20), aber oberhalb des Untergrundes (1) eingebracht wird, wobei zumindest die unteren Deckplatten (20) oder plattenförmigen Kuppelelemente (30) nach Anspruch 1 oder 2 ausgebildet sind.

4. Aufbau einer Flächenheizung, insbesondere einer Fußbodenheizung für ein Gebäude nach Anspruch 3,
**dadurch gekennzeichnet,**
**dass** die Deckplatten (20) und die plattenförmigen Kuppelelemente (30) Reihen von Bohrungen (22, 24) unterschiedlichen Durchmessers aufweisen, wobei die Bohrungen kleineren Durchmessers (22) den Vorsprung (25) aufweisen.

5. Aufbau einer Flächenheizung, insbesondere einer Fußbodenheizung für ein Gebäude nach einem der voranstehenden Ansprüche 3 oder 4,
**dadurch gekennzeichnet,**
**dass** der Vorsprung (25) kranzartig die Bohrung (22) zumindest partiell umgibt.

6. Aufbau einer Flächenheizung, insbesondere einer Fußbodenheizung für ein Gebäude nach einem der Ansprüche 3 bis 5,
**dadurch gekennzeichnet,**
**dass** der Außendurchmesser des kranzartigen Vorsprungs (25) in etwa dem Bohrungsdurchmesser der größeren Bohrung (24) entspricht.

7. Aufbau einer Flächenheizung, insbesondere einer Fußbodenheizung für ein Gebäude nach einem der voranstehenden Ansprüche 3 bis 6,
**dadurch gekennzeichnet,**
**dass** die zwischen dem mäanderförmig verlegten Heizrohr (5) angeordneter Grundplatten (10) aus isolierendem und druckfestem Werkstoff, z. B. Hartschaumstoff, ausgebildet sind.

8. Aufbau einer Flächenheizung, insbesondere einer Fußbodenheizung für ein Gebäude nach einem der voranstehenden Ansprüche 3 bis 7,
**dadurch gekennzeichnet,**
**dass** die Deckplatten (20) und/oder die plattenförmigen Kuppelelemente (30) mit dem Grundplatten (10) aus isolierendem Werkstoff verbunden, insbesondere verschraubt sind.

9. Aufbau einer Flächenheizung, insbesondere einer Fußbodenheizung für ein Gebäude nach Anspruch 8,
**dadurch gekennzeichnet,**
**dass** die Schrauben (11) einen Gewindedurchmesser aufweisen, der in etwa ¾ des Durchmessers des Schraubenkopfes beträgt.

10. Aufbau einer Flächenheizung, insbesondere einer Fußbodenheizung für ein Gebäude nach einem der voranstehenden Ansprüche 3 bis 9,
**dadurch gekennzeichnet,**
**dass** die Deckplatten (20) und die Kuppelplatten (30) aus Metall ausgebildet sind.

11. Aufbau einer Flächenheizung, insbesondere einer Fußbodenheizung für ein Gebäude nach einem der Ansprüche 4 bis 10,
**dadurch gekennzeichnet,**
**dass** die größeren Bohrungen (24) eine Senkung zur oberflächenbündigen Aufnahme von Senkkopfschrauben aufweisen.

12. Aufbau einer Flächenheizung, insbesondere einer Fußbodenheizung für ein Gebäude nach einem der Ansprüche 4 bis 11,
**dadurch gekennzeichnet,**
**dass** die Reihen von Bohrungen (22, 24) unterschiedlichen Durchmessers um den hälftigen Abstand versetzt zueinander in der Deckplatte (20) und/oder dem plattenförmigen Kuppelelement (30) angeordnet sind.

13. Aufbau einer Flächenheizung, insbesondere einer Fußbodenheizung für ein Gebäude nach einem der voranstehenden Ansprüche 3 bis 12,
**dadurch gekennzeichnet,**
**dass** auf dem Untergrund (1) unter dem Heizrohr (5) eine wärmeisolierende Folie (2), z. B. eine Schaumfolie, angeordnet ist.

14. Aufbau einer Flächenheizung, insbesondere einer Fußbodenheizung für ein Gebäude nach einem der voranstehenden Ansprüche 3 bis 13,
**dadurch gekennzeichnet,**
**dass** die Deckplatten (20) und/oder die plattenförmigen Kuppelelemente (30) einander soweit überlappen, dass die Überlappung breiter als der Durchmesser des Heizrohres (5) ist, um ein Eindrehen von Schrauben zur Befestigung auf den Grundplatten zu ermöglichen.
